# EUROPEAN PATENT SPECIFICATION

(11) **EP 2 800 694 B1**
(45) Date of publication and mention of the grant of the patent: **09.09.2020**
(21) Application number: 12795127.5
(22) Date of filing: 30.10.2012
(51) Int. Cl.: B64D 37/32, B64D 45/02

(54) **ELECTRIC CHARGE DISSIPATION SYSTEM FOR AIRCRAFT**
SYSTEM ZUR ABLEITUNG ELEKTRISCHER LADUNGEN FÜR EIN FLUGZEUG
SYSTÈME DE DISSIPATION DE CHARGES ÉLECTRIQUES POUR AVION

(30) Priority: 04.01.2012 US 201213343443
(43) Date of publication of application: 12.11.2014
(73) Proprietor: The Boeing Company, Chicago, IL 60606-1596 (US)
(72) Inventor: GERKEN, Noel Timothy, Maple Valley, Washington 98038 (US); LE, Quynhgiao Nguyen, Bellevue, Washington 98006 (US)
(74) Representative: Bryn-Jacobsen, Caelia
(86) International application number: PCT/US2012/062627
(87) International publication number: WO 2013/103436

(56) References cited:
- EP-A1- 2 399 739
- WO-A1-2008/056123
- US-A1- 2009 140 098
- US-A1- 2011 315 818

## Description

### BACKGROUND INFORMATION

### 1. Field:

The present disclosure relates generally to aerospace platforms and, in particular, to structures in aerospace platforms. Still more particularly, the present disclosure relates to a method and apparatus for dissipating electric charges on surfaces in aerospace platforms.

### 2. Background:

Static electricity is a build-up of an electric charge on the surface of an object. The object may be an aerospace platform, such as, for example, an aircraft, a spacecraft, or some other type of aerospace platform. Static electricity may build up on various surfaces on an aircraft. For example, static electricity may build up on a surface of a fuel tank in the aircraft. The dissipation of static electricity may be desirable to reduce the possibility of a discharge of static electricity within a structure.

Many fuel tanks in aircraft are comprised of aluminum. This material often provides a desired level of dissipation of the electric charge. If greater dissipation of the electric charge is desired, other mechanisms may be used. For example, grounding technologies and materials have been developed to dissipate the electric charge that forms static electricity. Additionally, additives have been placed into liquids, such as fuel, to reduce the formation and aid in the dissipation of static electricity.

With the use of composite materials in place of metals, the manner in which static electricity is handled in structures, such as fuel tanks, changes. With aluminum, these charges may dissipate because of the conductivity of the structure. With composite materials, however, surface conductivity may not be present or as high as with metals. As a result, static electricity may build up more easily on surfaces of fuel tanks using composite materials.

Therefore, it would be desirable to have a method and apparatus that takes into account at least some of the issues discussed above, as well as possibly other issues.

### SUMMARY

In one illustrative embodiment, an apparatus comprises a first composite layer and a second composite layer in which the second composite layer is associated with the first composite layer. The first composite layer and the second composite layer form a structure. comprising a fuel tank in an aircraft.

The second composite layer comprises a resin treated with a conductive material configured to dissipate an electric charge on a surface of the structure and limit a flow of an electrical current in the second composite layer in which the electrical current is caused by an electromagnetic event; and a primer layer, located between the second composite layer and an interior of the structure, the primer layer configured to aid in dissipating the electric charge.

In another not claimed embodiment, a composite fuel tank for an aircraft comprises a wall having a first composite layer and a second composite layer. The second composite layer is located on the first composite layer in an interior of the composite fuel tank. The first composite layer and the second composite layer form a structure. The second composite layer is configured to dissipate an electric charge on a surface in the interior of the composite fuel tank and limit a flow of an electrical current on the surface in the interior of the composite fuel tank in which the electrical current is caused by an electromagnetic event.

In yet another illustrative embodiment, a method is present for operating a platform. The platform is operated in which the platform has a structure comprising a first composite layer and a second composite layer connected to the first composite layer, wherein the first composite layer and the second composite layer form a structure comprising a fuel tank in an aircraft and wherein the second composite layer comprises a resin treated with a conductive material configured to dissipate an electric charge on a surface of the structure and limit a flow of an electrical current in the second composite layer in which the electrical current is caused by an electromagnetic event; and a primer layer, located between the second composite layer and an interior of the structure, the primer layer configured to aid in dissipating the electric charge.

WO2008/056123 - HEXCEL COMPOSITES LTD - states in the abstract "A composite material, the composite material comprising at least one prepreg, said prepreg comprising at least one polymeric resin and at least one fibrous reinforcement; and conducting particles dispersed in the polymeric resin".

US2009/140098 - LENGSFEL HAUKE et al *-* states in the abstract "The present invention relates to a component, in particular in the field of aviation and spaceflight, having resin matrix in which carbon nanotubes are embedded for high conductivity of the component".

EP2399739 - MITSUBISHI HEAVY IND LTD - states in the abstract "Provided is a method for producing, with good work performance, a composite comprising a lightning-resistant layer have excellent adhesion with a resin-based composite and good fatigue properties. The method for producing a resin-based composite comprises a step for forming a laminate by the successive lamination, on a first resin sheet (11) formed primarily from a fiber-reinforced resin, of a conductive layer (12) formed from a resin containing metal powder and a second resin sheet (13) formed primarily from a fiber-reinforced resin and a step for baking the laminate and bonding the first resin sheet (11), conductive layer (12), and second resin sheet (13) to form a resin-based composite (10)".

Aspects are described in the appended claims.

US2011315 818 in its abstract states "There is provided a method for mitigating static discharge in a fuel container. The method provides a static dissipative coating having a volume resistivity of 1.0 × 109 Ω-m (ohm-meter) or less when measured at 40 V (volts) or less, having a surface resistivity of 1.0 × 1011 Ω/sq (ohm per square) or less when measured at 100 V (volts) or less, having a breakdown voltage of 4000 V (volts) or less, and having a charge decay of 60 seconds or less. The method further provides applying the static dissipative coating to a surface of the fuel container to form a coated surface."

### BRIEF DESCRIPTION OF THE DRAWINGS

The novel features believed characteristic of the illustrative embodiments are set forth in the appended claims. The illustrative embodiments, however, as well as a preferred mode of use, further objectives, and features thereof will best be understood by reference to the following detailed description of an illustrative embodiment of the present disclosure when read in conjunction with the accompanying drawings, wherein:
Figure 1 is an illustration of an aircraft manufacturing and service method in accordance with an illustrative embodiment;
**Figure 2** is an illustration of an aircraft in which an illustrative embodiment may be implemented;
**Figure 3** is an illustration of an electric charge management environment in accordance with an illustrative embodiment;
**Figure 4** is an illustration of an electric charge dissipation system in accordance with an illustrative embodiment;
**Figure 5** is an illustration of a manufacturing environment for a structure in accordance with an illustrative embodiment;
**Figure 6** is an illustration of an aircraft with fuel tanks in accordance with an illustrative embodiment;
**Figure 7** is an illustration of a cross section of a structure in accordance with an illustrative embodiment;
**Figure 8** is an illustration of a cross-sectional view of a portion of a fuel tank in accordance with an illustrative embodiment;
**Figure 9** is an illustration of a flowchart of a process for manufacturing a structure with an electric charge dissipation system in accordance with an illustrative embodiment; and
**Figure 10** is an illustration of a flowchart of a process to operate a platform in accordance with an illustrative embodiment.

### DETAILED DESCRIPTION

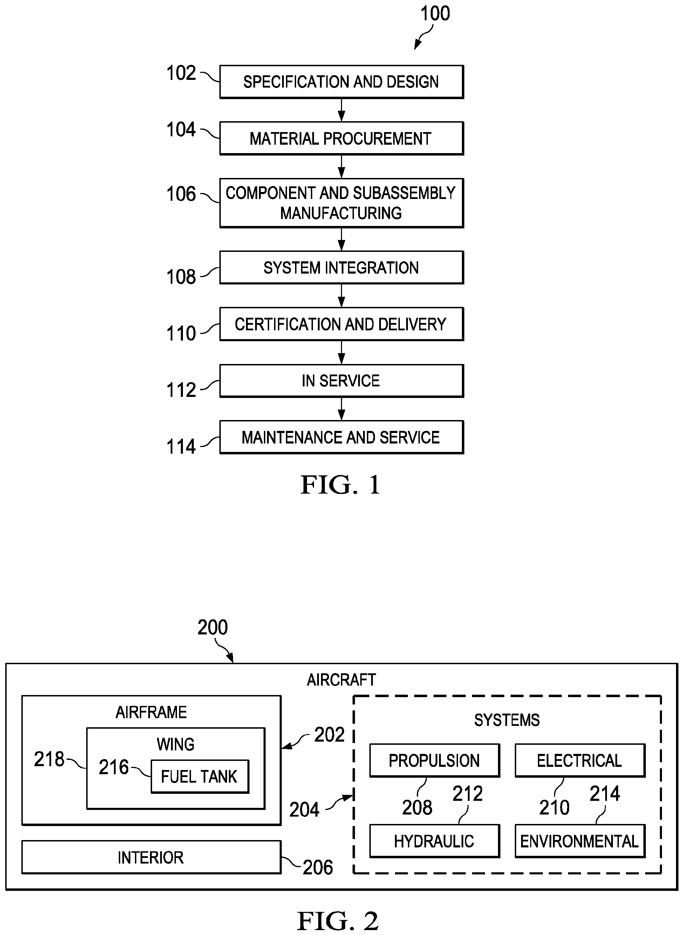

Referring more particularly to the drawings, embodiments of the disclosure may be described in the context of aircraft manufacturing and service method **100** as shown in **Figure 1** and aircraft **200** as shown in **Figure 2****.** Turning first to **Figure 1****,** an illustration of an aircraft manufacturing and service method is depicted in accordance with an illustrative embodiment. During pre-production, aircraft manufacturing and service method **100** may include specification and design **102** of aircraft **200** in **Figure 2** and material procurement **104.**

During production, component and subassembly manufacturing **106** and system integration **108** of aircraft **200** in **Figure 2** takes place. Thereafter, aircraft **200** in **Figure 2** may go through certification and delivery **110** in order to be placed in service **112.** While in service **112** by a customer, aircraft **200** in **Figure 2** is scheduled for routine maintenance and service **114,** which may include modification, reconfiguration, refurbishment, and other maintenance or service.

Each of the processes of aircraft manufacturing and service method **100** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of venders, subcontractors, and suppliers; and an operator may be an airline, leasing company, military entity, service organization, and so on.

With reference now to **Figure 2****,** an illustration of an aircraft is depicted in which an illustrative embodiment may be implemented. In this example, aircraft **200** is produced by aircraft manufacturing and service method **100** in **Figure 1** and may include airframe **202** with a plurality of systems **204** and interior **206.** Examples of systems **204** include one or more of propulsion system **208,** electrical system **210,** hydraulic system **212,** and environmental system **214.** Any number of other systems may be included. Although an aerospace example is shown, different illustrative embodiments may be applied to other industries, such as the automotive industry.

The different illustrative embodiments may be implemented within airframe **202** in the depicted examples. For example, one or more of the different illustrative embodiments may be implemented in a structure, such as fuel tank **216** in wing **218** of airframe **202** for aircraft **200.**

In these illustrative examples, fuel tank **216** in wing **218** may be comprised of composite materials. These composite materials may include, for example, carbon fiber reinforced composite materials. These components may be comprised partially or entirely of composite materials, depending on the particular implementation. The different illustrative embodiments may be implemented to manage an electric charge that may form on the interior surfaces of fuel tank **216.**

Apparatuses and methods embodied herein may be employed during at least one of the stages of aircraft manufacturing and service method **100** in **Figure 1****.** As used herein, the phrase "at least one of', when used with a list of items, means that different combinations of one or more of the listed items may be used and only one of each item in the list may be needed. For example, "at least one of item A, item B, and item C" may include, for example, without limitation, item A or item A and item B. This example also may include item A, item B, and item C or item B and item C.

In one illustrative example, components or subassemblies produced in component and subassembly manufacturing **106** in **Figure 1** may be fabricated or manufactured in a manner similar to components or subassemblies produced while aircraft **200** is in service **112** in **Figure 1****.** As yet another example, a number of apparatus embodiments, method embodiments, or a combination thereof may be utilized during production stages, such as component and subassembly manufacturing **106** and system integration **108** in **Figure 1****.** A number, when referring to items, means one or more items. For example, a number of apparatus embodiments is one or more apparatus embodiments.

A number of apparatus embodiments, method embodiments, or a combination thereof may be utilized while aircraft **200** is in service **112** and/or during maintenance and service **114** in **Figure 1****.** The use of a number of the different illustrative embodiments may substantially expedite the assembly of and/or reduce the cost of aircraft **200.**

The different illustrative embodiments recognize and take into account a number of considerations. For example, the different illustrative embodiments recognize and take into account that primers may be used to manage the dissipation of electric charges on the surfaces of the fuel tank. The different illustrative embodiments recognize and take into account that this mechanism, however, may not provide the desired amount of dissipation of electric charges, such as static electricity.

The different illustrative embodiments recognize and take into account that primers may be formulated to provide increased dissipation of electric charges as compared to currently available primers. Additionally, the application of the primers may be performed to increase dissipation of electric charges. For example, the thickness of the primer placed on the surface of the fuel tank may be selected to increase dissipation of electric charges. Use of these primers, however, may increase the expense of manufacturing structures, such as fuel tanks, from composite materials.

The different illustrative embodiments also recognize and take into account that, with the use of primers and other mechanisms to dissipate electric charges that may build up on the surface of structures, the complexity and weight of the aircraft may increase more than desired. The different illustrative embodiments recognize and take into account that it may be desirable to have a layer that allows electric charges to be dissipated in place of or in addition to the primer. When both the primer and the additional layer that allows electric charges to be dissipated are present, redundant electric charge dissipation is provided.

Time and personnel are needed to apply primers to the interior surfaces of the fuel tank. Applying the appropriate amount of primer to obtain a desired amount of dissipation may require inspections and additional operations to be performed to ensure that the desired amount of primer is present. Additionally, time and personnel may also be needed to add other components to a fuel tank to increase the dissipation of electric charges that may form. As a result, the time needed to manufacture aircraft may be increased.

Thus, the different illustrative embodiments provide a method and apparatus for reducing an electric charge on the surface of a structure. In the different illustrative embodiments, an apparatus may comprise a first composite layer and a second composite layer. The second composite layer is associated with the first composite layer. The first composite layer and the second composite layer form a composite structure. The second composite layer has a conductivity configured to dissipate an electric charge on a surface of the structure.

The different illustrative embodiments also recognize and take into account that, in addition to having a conductivity to dissipate electric charges on a surface of a structure, it may be desirable to also limit current flow through the structure caused by an electromagnetic event in a manner that reduces effects on the structure by the electromagnetic event. The limit on the electrical current may reduce formation of inconsistencies, avoid a reduction in the useful life of the structure, and/or other undesirable conditions or effects.

With this consideration in mind, the second composite layer also has a conductivity that is configured to limit a flow of electrical current through the second composite layer in addition to being configured to dissipate an electric charge on the surface of the structure. In particular, it is desirable to limit current flow that may occur from an electromagnetic event. For example, the electromagnetic event may be from the environment around the aircraft, devices in the aircraft, and other suitable sources.

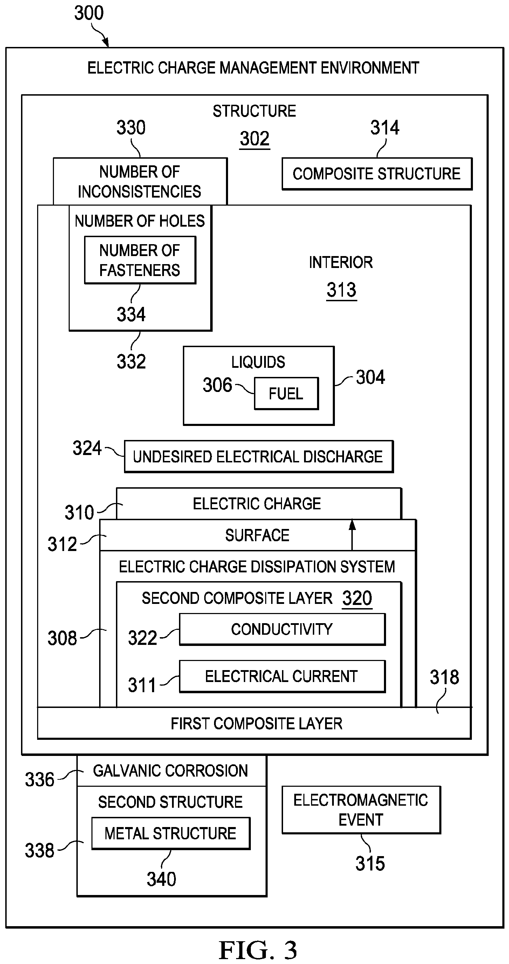

With reference now to **Figure 3****,** an illustration of an electric charge management environment is depicted in accordance with an illustrative embodiment. In this illustrative example, electric charge management environment **300** may be implemented using aircraft **200** in **Figure 2****.**

As depicted, structure **302** may be a structure in aircraft **200** in **Figure 2****.** In these illustrative examples, structure **302** may hold liquids **304.** In particular, structure **302** may be a fuel tank, such as fuel tank **216** in **Figure 2****,** and liquids **304** may take the form of fuel **306.** In particular, structure **302** may be located within wing **218** in **Figure 2** in these illustrative examples.

Electric charge dissipation system **308** may be associated with structure **302.** Electric charge dissipation system **308** is configured to dissipate electric charge **310** that may form on surface **312** of structure **302.**

In addition, electric charge dissipation system **308** is also configured to limit a flow of electrical current **311** caused by electromagnetic event **315.** In these illustrative examples, electromagnetic event **315** is not an event that causes electric charge **310.** An electromagnetic event may be caused by an external source to the platform in which composite structure **314** is located or caused by another device in the platform that generates electrical currents.

In these illustrative examples, surface **312** is located in interior **313** of structure **302.** In other words, surface **312** is located in interior **313** of the fuel tank.

In these illustrative examples, structure **302** takes the form of composite structure **314.** Structure **302** is formed using first composite layer **318.** Additionally, electric charge dissipation system **308** includes second composite layer **320.** In this illustrative example, second composite layer **320** is located over first composite layer **318.**

Second composite layer **320** in electric charge dissipation system **308** may be considered part of structure **302** in these illustrative examples. In other words, second composite layer **320** may be formed at the same time first composite layer **318** is formed for structure **302.** As a result, additional time and expense to add electric charge dissipation system **308** to structure **302** after manufacturing of structure **302** may be avoided.

As depicted, first composite layer **318** and second composite layer **320** may be cured at the same time. This type of curing also may be referred to as co-curing.

In these illustrative examples, second composite layer **320** is configured to dissipate electric charge **310** that builds up on surface **312** of structure **302.** In this example, second composite layer **320** has conductivity **322.** Conductivity **322** allows electric charge **310** to be dissipated from surface **312** of structure **302,** while limiting the flow of electrical current **311** in second composite layer **320.** The flow of electrical current **311** is limited by second composite layer **320** to an amount that reduces effects from electromagnetic event **315,** such as lightning or some other source. In other words, conductivity **322** is high enough to dissipate electric charge **310** to be dissipated from surface **312** but low enough to limit the flow of electrical current **311** caused by electromagnetic event **315,** such as a lightning strike.

In this manner, the buildup of electric charge **310** in second composite layer **320** may be reduced and/or prevented. In particular, conductivity **322** of second composite layer **320** allows electric charge **310** to be dissipated to reduce undesired electrical discharge from surface **312** of structure **302.** This reduction may include substantially preventing undesired electrical discharge to form on surface **312** of structure **302.**

As conductivity **322** of second composite layer **320** increases, the dissipation of electric charge **310** also increases. Conductivity **322** may be measured using resistivity. Resistivity is the inverse of conductivity **322.** As one illustrative example, the resistivity for second composite layer **320** that allows dissipation of electric charge **310** may be from about 10⁶ ohms-meters to about 10⁹ ohms-meters. This range of values for resistivity corresponds to a low range of values for conductivity **322.**

Further, when conductivity **322** is selected to also limit the flow of electrical current **311,** the resistivity of second composite layer **320** may be from about 1x10⁶ ohms-meters to about 1x10¹⁵ ohms-meters. Additionally, in these depicted examples, second composite layer **320** is configured to reduce undesired electrical discharge **324** in interior **313** of structure **302** that is caused by external sources.

Furthermore, second composite layer **320** is configured to limit a flow of electrical current **311** that may be caused by an external source. In particular, the external source may cause an electromagnetic event, such as electromagnetic event **315.** By limiting the flow of electrical current **311** through second composite layer **320,** the flow of electrical current **311** to interior **313** of structure **302** also may be limited.

These external sources may be any sources that are not part of structure **302.** For example, without limitation, an external source, such as lightning, may cause undesired electrical discharge 324 without the use of second composite layer 320.

Further, limiting the flow of electrical current 311 may also occur with electromagnetic event 315 caused by sources associated with structure 302. These sources may be, for example, a power generator, a switch, a computer system, an electrical system, a light system, and other suitable devices that use and/or generate electrical power.

Further, second composite layer 320 also may be configured such that number of inconsistencies 330 in structure 302 may be reduced. Number of inconsistencies 330 may include, for example, without limitation, fiber breakouts, tears, and/or other types of inconsistencies. Number of inconsistencies 330 may form when number of holes 332 for number of fasteners 334 is drilled into structure 302. As number of inconsistencies 330 increases, the number of rework procedures that need to be performed to fix number of inconsistencies 330 may also increase. Second composite layer 320 is configured to reduce number of inconsistencies 330 that is formed in structure 302 to reduce the number of rework procedures that may be needed.

In addition, second composite layer 320 in electric charge dissipation system 308 also may reduce an occurrence of galvanic corrosion 336. Galvanic corrosion 336 is an electrical chemical process in which electrical contact occurs between two different types of metals in the presence of liquid which causes corrosion. Galvanic corrosion 336 may occur where second structure 338 contacts structure 302. In these illustrative examples, second structure 338 is metal structure **340.** Second composite layer 320 separates second structure 338 from first composite layer 318 to reduce galvanic corrosion 336.

The illustration of electric charge management environment **300** in **Figure** 3 is not meant to imply physical or architectural limitations to the manner in which different illustrative embodiments may be implemented. Other components in addition to and/or in place of the ones illustrated may be used. Some components may be unnecessary in some illustrative embodiments. Also, the blocks are presented to illustrate some functional components. One or more of these blocks may be combined and/or divided into different blocks when implemented in different illustrative embodiments.

For example, structure 302 has been described as a structure in aircraft **200** in **Figure 2****.** In other illustrative embodiments, structure 302 may be located in other platforms. For example, without limitation, other illustrative embodiments may be applied to a mobile platform, a stationary platform, a land-based structure, an aquatic-based structure, a space-based structure, and/or some other suitable object. More specifically, the different illustrative embodiments may be applied to, for example, without limitation, a submarine, a bus, a personnel carrier, a tank, a train, an automobile, a spacecraft, a space station, a satellite, a surface ship, a power plant, a dam, a manufacturing facility, a building, and/or some other suitable object.

Still, in other illustrative embodiments, structure 302 may take other forms other than a fuel tank in which liquids 304 are in the form of fuel 306. For example, without limitation, liquids 304 may include other volatile and/or non-volatile liquids. Additionally, structure 302 also may be configured to hold gases in addition to or in place of liquids 304.

As another illustrative example, although only first composite layer **318** and second composite layer **320** are depicted for structure **302** in electric charge management environment **300,** other layers may be present in addition to first composite layer **318** and second composite layer **320,** depending on the particular implementation.

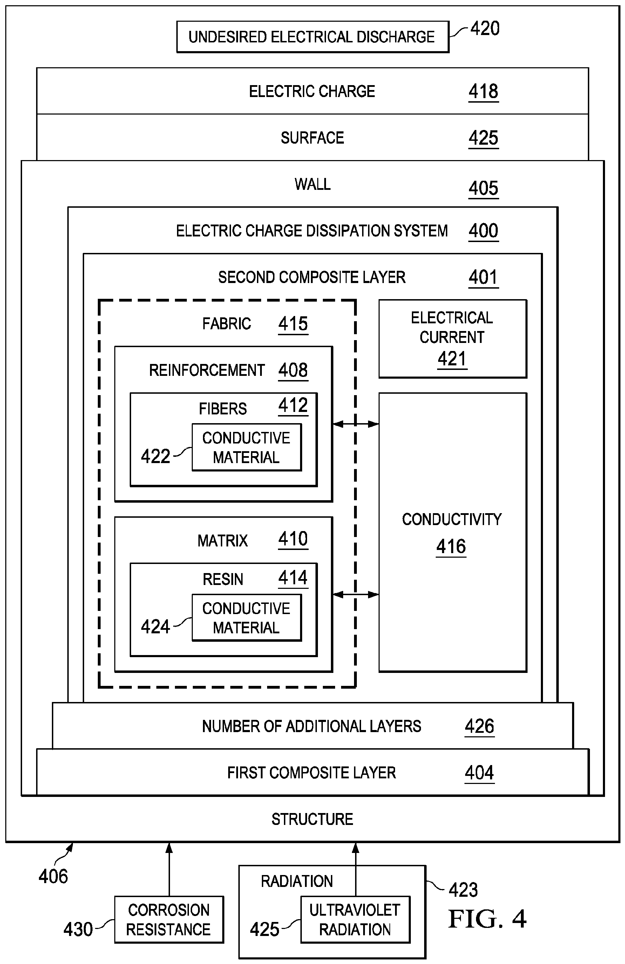

With reference now to **Figure 4****,** an illustration of an electric charge dissipation system is depicted in accordance with an illustrative embodiment. In this illustrative example, electric charge dissipation system **400** is an example of one implementation of electric charge dissipation system **308** in **Figure 3****.**

In this depicted example, second composite layer **401** is formed on first composite layer **404** in wall **405** of structure **406.** First composite layer **404** is a composite layer for structure **406.** In particular, in this illustrative example, first composite layer **404** comprises carbon.

As depicted, second composite layer **401** comprises reinforcement **408.** Reinforcement **408** may take the form of fibers **412.** In these illustrative examples, fibers **412** may be configured to form fabric **415.** In other words, reinforcement **408** may take the form of fabric **415** containing fibers **412.** Fabric **415** may be manufactured through weaving, knitting, spreading, bonding, and/or other mechanisms for associating fibers **412** with each other.

In these illustrative examples, second composite layer **401** may also include matrix **410.** Matrix **410** may take the form of resin **414.** Resin **414** may be infused into fabric **415** to form second composite layer **401.** Second composite layer **401** may be, for example, a fiberglass layer or some other suitable type of layer.

In these illustrative examples, fibers **412** may have conductivity **416** such that electric charge **418** can be dissipated from surface **425** of structure **406.** Additionally, conductivity **416** may be configured such that undesired electrical discharge **420** is reduced and/or prevented from occurring.

Additionally, in some illustrative examples, fibers **412** also may have conductivity such that flow of electrical current **421** is limited in which electrical current **421** is caused by an electromagnetic event. In particular, flow of electrical current **421** may be limited in second composite layer **401.**

As a result, flow of electrical current **421** may be limited in structure **406.** With conductivity **416** configured to reduce undesired electrical discharge **420** and flow of electrical current **421,** second composite layer **401** may provide galvanic isolation. The reduction in undesired electrical discharge **420** and flow of electrical current **421** may be such that undesired electrical discharge **420** and flow of electrical current **421** may be eliminated. In other words, second composite layer **401** may electrically isolate structure **406** from other structures or components in aircraft **200** in **Figure 2****.**

In these illustrative examples, fibers **412** may be comprised of a number of different materials. For example, without limitation, fibers **412** may be comprised of at least one of glass, carbon, ceramic, silica, organic materials, plastic, a polymer, nylon, metal, and other suitable types of materials.

Further, in some illustrative examples, fibers **412** may be associated with conductive material **422.** Conductive material **422** may be, for example, carbon, a metal, or some other suitable type of conductive material.

In these illustrative examples, one component may be associated with another component in a number of different ways. For example, a first component may be associated with a second component by the first component coating the second component, the first component being formed with the second component, the first component physically contacting the second component in reinforcement **408,** and in other suitable ways. For example, a first component, such as fibers **412,** may be coated with a second component, such as conductive material **422.** In these illustrative examples, at least a portion of fibers **412** may be coated with conductive material **422.** The coating is configured to cover at least a portion of fibers **412.** The coating may be in the form of a film of material that covers a fiber in fibers **412.** In some cases, the coating may be material in the form of a powder that adheres to the fiber. For example, a nano-powder may be used to coat at least a portion of fibers **412.** The coating may also be applied such that the material takes the form of a liquid or gas.

In other words, depending on the amount of conductivity **416** desired, some or all of fibers **412** may be coated conductive material **422.** In yet another illustrative example, a portion of fibers **412** may be comprised of conductive material **422,** while another portion of fibers **412** may not include conductive material **422.** Of course, many other variations may be present in the manner in which conductive material **422** may be used with fibers **412** to provide conductivity **416** at a desired level. In some illustrative examples, fibers **412** and/or resin **414** may be doped or treated to provide conductivity **416.**

In other illustrative examples, resin **414** may also provide conductivity **416** in place of or in addition to the conductivity in fibers **412.** For example, conductivity **416** may be provided through conductive material **424** in resin **414.** Conductive material **422** and conductive material **424** may both be present to provide conductivity **416** for second composite layer **401,** depending on the particular implementation.

Conductive material **422** and conductive material **424** may be comprised of at least one of, for example, without limitation, a metal, a metal alloy, nickel, carbon, a conductive polymer, titanium dioxide, carbon black, and other suitable types and combinations of materials that may provide a desired level of conductivity **416.** Further, conductive material **424** also may be selected to provide protection from degradation that may be caused by radiation **423.** Radiation **423** may be, for example, ultraviolet radiation **425.** In this manner, the useful life of structure **406** may be increased. Conductive material **422** may also be selected as having an ability to provide corrosion resistance **430** for structure **406.**

In this illustrative example, second composite layer **401** is located on first composite layer **404.** Of course, second composite layer **401** may be in direct contact with first composite layer **404.** In other illustrative examples, second composite layer **401** may be connected to first composite layer **404** through other composite layers, such as number of additional layers **426.** Number of additional layers **426** may comprise a number of conductive layers.

Number of additional layers **426** may provide other desirable features. For example, number of additional layers **426** may provide for isolation of structure **406** from another structure in a manner that reduces galvanic corrosion.

The illustration of electric charge dissipation system **400** in **Figure 4** is not meant to imply physical or architectural limitations to the manner in which different illustrative embodiments may be implemented. Other components in addition to and/or in place of the ones illustrated may be used. Some components may be unnecessary in some illustrative embodiments. Also, the blocks are presented to illustrate some functional components. One or more of these blocks may be combined and/or divided into different blocks when implemented in different illustrative embodiments.

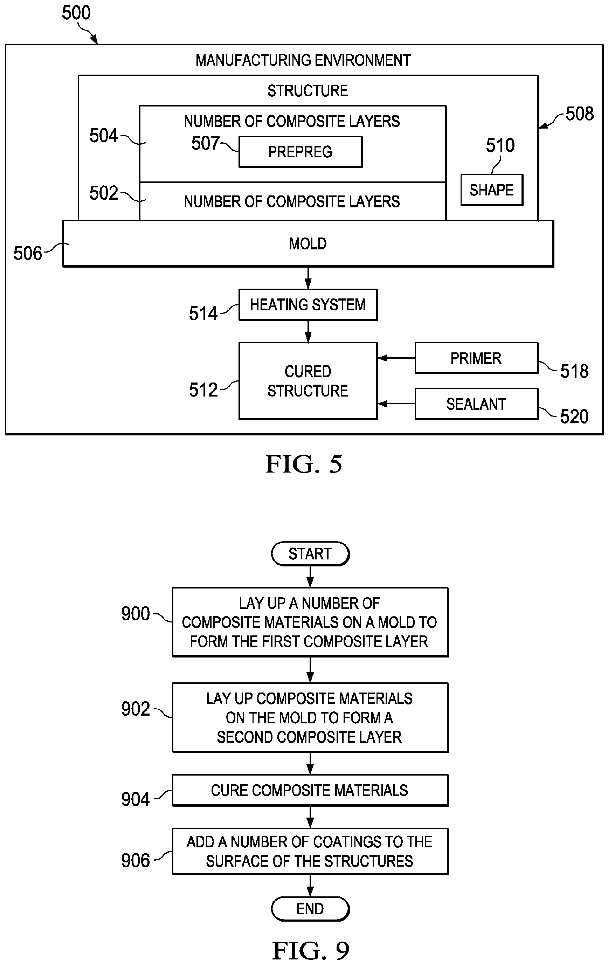

With reference now to **Figure 5****,** an illustration of a manufacturing environment for a structure is depicted in accordance with an illustrative embodiment. In this illustrative example, manufacturing environment **500** is an example of an environment that may be used to manufacture structure **302** in **Figure 3** or structure **406** in **Figure 4****.**

In these illustrative examples, number of composite layers **502** and number of composite layers **504** may be laid up on mold **506.** Mold **506** may take a number of different forms. For example, mold **506** may be an inner-line mold or an outer-line mold in these examples.

Number of composite layers **502** forms composite layers for the wall of a fuel tank in this example. Number of composite layers **504** includes composite layers for an electric charge dissipation system in these depicted examples. For example, number of composite layers **502** may comprise first composite layer **404** in **Figure 4****.** Number of composite layers **504** may include second composite layer **401** in **Figure 4****.** Additionally, number of additional layers **426** in **Figure 4** also may be present in number of composite layers **504.**

Number of composite layers **504** may take the form of prepreg **507.** In other words, number of composite layers **504** may be ready for curing without requiring infusion of resin when placed onto number of composite layers **502** in these illustrative examples.

After number of composite layers **504** and number of composite layers **502** have been laid up on mold **506,** structure **508** has shape **510** and is ready for curing. Mold **506** with structure **508** may be cured using heating system **514.** Heating system **514** may provide both heat and a vacuum, depending on the particular implementation. Heating system **514** may include, for example, without limitation, an autoclave, an oven, a heating blanket, and/or some other suitable type of heating device. Of course, any heat source suitable for curing composite materials may be employed.

In these illustrative examples, structure **508** may be a fuel tank in a wing of an aircraft. After curing structure **508,** cured structure **512** is formed. Thereafter, primer **518,** sealant **520,** and/or other suitable layers may be added to cured structure **512,** depending on the particular implementation.

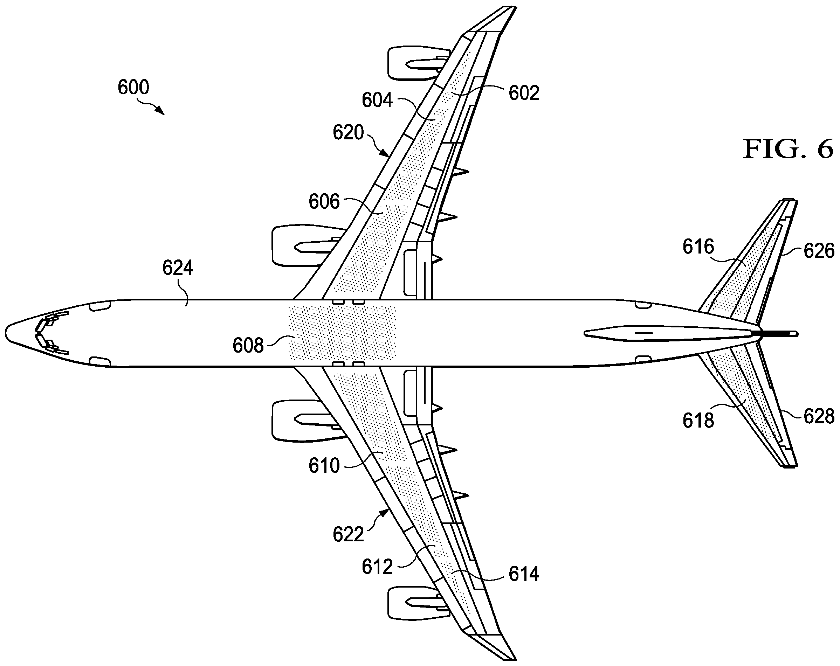

With reference now to **Figure 6****,** an illustration of an aircraft with fuel tanks is depicted in accordance with an illustrative embodiment. In this depicted example, aircraft **600** is an example of one implementation of aircraft **200** in **Figure 2****.** In this example, fuel tanks **602, 604, 606, 608, 610, 612, 614, 616,** and **618** are located in aircraft **600.**

Fuel tanks **602, 604,** and **606** are located in wing **620;** while fuel tanks **610, 612,** and **614** are located in wing **622.** Fuel tank **608** is located in fuselage **624.** Fuel tanks **616** and **618** are located in horizontal stabilizers **626** and **628,** respectively.

In these illustrative examples, electric charge dissipation system **308** in **Figure 3** and electric charge dissipation system **400** in **Figure 4** may be implemented in at least one of fuel tanks **602, 604, 606, 608, 610, 612, 614, 616,** and **618.**

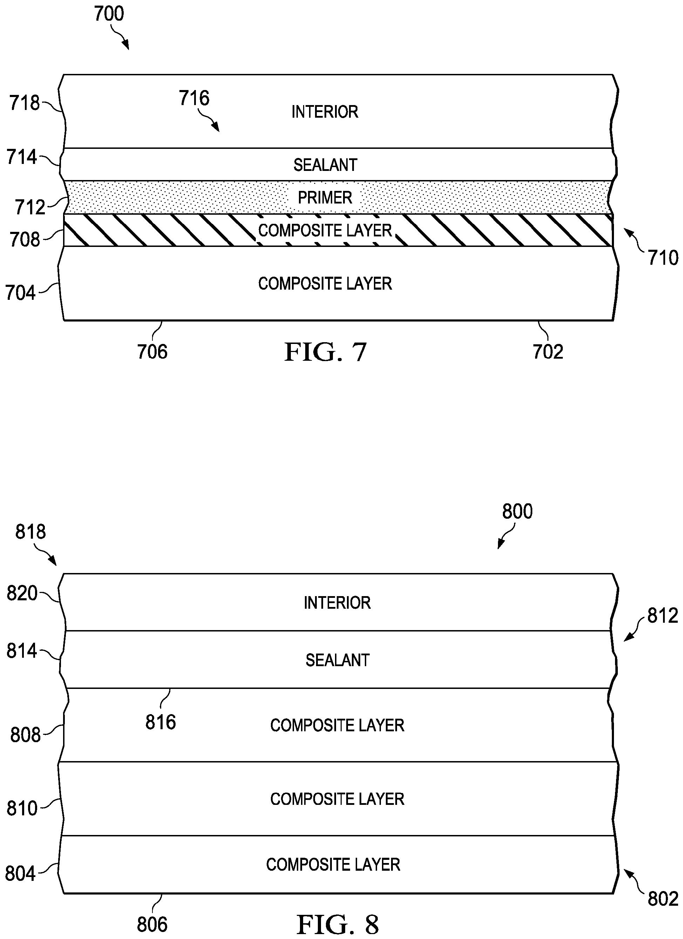

With reference now to **Figure 7****,** an illustration of a cross section of a structure is depicted in accordance with an illustrative embodiment. In this illustrative example, cross section **700** is a cross section from a fuel tank, such as fuel tank **602** in **Figure 6****.** Of course, cross section **700** may be employed in any fuel tank illustrated for aircraft **600** in **Figure 6****.**

In this illustrative example, structure **702** in cross section **700** is a portion of fuel tank 602 in **Figure 6****.** In this illustrative example, composite layer **704** forms wall **706** of fuel tank **602.**

As depicted, composite layer **708** comprises a portion of electric charge dissipation system **710.** Electric charge dissipation system **710** is an example of one implementation for electric charge dissipation system **308** in **Figure 3** and electric charge dissipation system **400** in **Figure 4****.**

In this depicted example, composite layer **708** is in contact with composite layer **704.** Primer **712** also may be part of electric charge dissipation system **710.** In this example, primer **712** may be comprised of a material that may also aid in dissipating electric charges. Sealant **714** is formed on primer **712** in these illustrative examples.

In these illustrative examples, composite layer **708** may be configured to have conductivity such that electric charge that forms on surface **716** of fuel tank **602** may be dissipated. Additionally, composite layer **708** also may be configured to reduce or prevent undesired electrical discharge caused by electrical currents generated by external sources. Composite layer **708** also may be configured to reduce and/or prevent undesired electrical discharge in fuel tank interior **718** that may occur in or travel through composite layer **704.**

Further, composite layer **708** also may be configured to limit a flow of electrical current through composite layer **708.** As a result, a flow of an electrical current to surface **716** of fuel tank **602** may be limited. Further, a flow of electrical current to other structures contacting fuel tank **602** also may be limited.

Also, composite layer **708** may be configured to reduce galvanic corrosion from occurring from other structures that may contact fuel tank **602.** In another illustrative example, composite layer **708** may be configured to reduce degradation of fuel tank **602** from exposure to ultraviolet radiation.

Turning next to **Figure 8****,** an illustration of a cross-sectional view of a portion of a fuel tank is depicted in accordance with an illustrative embodiment. Structure **800** in cross section **802** is for a portion of fuel tank **602** in **Figure 6** in this illustrative example. Composite layer **804** forms wall **806** of fuel tank **602** in **Figure 6****.**

As depicted, composite layer **808** is located on composite layer **804.** Additionally, composite layer **810** also may be located between composite layer **808** and composite layer **804.** Composite layer **808** and composite layer **810** may form electric charge dissipation system **812** in this particular example. Electric charge dissipation system **812** may be an example of an implementation of electric charge dissipation system **308** in **Figure** 3 and electric charge dissipation system **400** in **Figure 4****.**

As illustrated, sealant **814** may be applied to surface **816** of composite layer **808.** In this particular example, a primer is not present. Composite layer **808** is configured to dissipate an electric charge that may form on surface **818** of structure **800** for fuel tank **602.**

Additionally, composite layer **808** also may be configured to reduce and/or prevent undesired electrical discharge in fuel tank interior **820** that may occur in or travel through composite layer **804,** as well as limit a flow of electrical current in composite layer **804** in which the electrical current is caused by an electromagnetic event.

The illustration of different components in fuel tank **602** in **Figure 7** and **Figure 8** are presented for purposes of showing one implementation of an electric charge dissipation system. The different components shown in **Figure 7** and **Figure 8** may be combined with components in **Figure 2-5****,** used with components in **Figures 2-5****,** or a combination of the two. Additionally, some of the components in **Figure 7** and **Figure 8** may be illustrative examples of how components shown in block form in **Figures 2-5** can be implemented as physical structures.

Further, other electric charge dissipation systems may have other configurations. For example, in some illustrative examples, sealant **714** and primer **712** may be unnecessary. In still yet other illustrative examples, other layers may be present between composite layer **808** and composite layer **804.** For example, another composite layer or another material, such as fiberglass, may be located between composite layer **808** and composite layer **804.**

As another example, additional composite layers may be present in structure **800** in electric charge dissipation system **812** in addition to the ones illustrated. In addition, in some illustrative examples, paint or primer also may be present on surface **816** of composite layer **808.**

In these depicted examples, composite layer **804** and composite layer **808** are laid up on a mold. These composite layers are cured to form fuel tank **602.** As a result, additional operations are unneeded to add electric charge dissipation system **812** to fuel tank **602** at a later time, as compared to currently available electric charge dissipation systems.

With reference now to **Figure 9****,** an illustration of a flowchart of a process for manufacturing a structure with an electric charge dissipation system is depicted in accordance with an illustrative embodiment. The process illustrated in **Figure 9** may be implemented to manufacture a structure, such as structure **302** in **Figure 3** and/or structure **406** in **Figure 4****,** in accordance with an illustrative embodiment. The process illustrated in this figure may be implemented using manufacturing environment **500** in **Figure 5****.**

The process begins by laying up a number of composite materials on a mold to form a first composite layer (operation **900**). This number of composite materials may be the composite materials for a composite layer, such as first composite layer **318** in **Figure 3****.** Thereafter, composite materials are laid up on the mold to form a second composite layer (operation **902**). This second composite layer is second composite layer **320** in **Figure 3****.**

Thereafter, the composite materials are cured (operation **904**). The process then adds a number of coatings to the surface of the structures (operation **906**), with the process terminating thereafter. These coatings may include, for example, without limitation, a primer, a sealant, paint, and other suitable types of coatings.

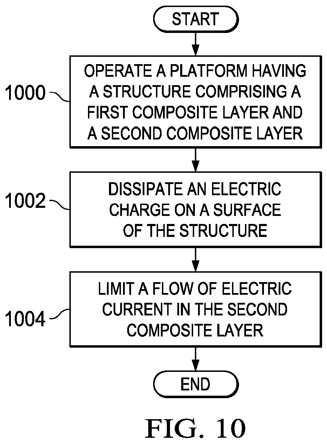

With reference now to **Figure 10****,** an illustration of a flowchart of a process to operate a platform is depicted in accordance with an illustrative embodiment. The process illustrated in **Figure 10** may be implemented in a platform, such as aircraft **200** in **Figure 2****.** Further, this process may be implemented in other types of platforms.

The process begins by operating a platform having a structure comprising a first composite layer and a second composite layer (operation **1000**). In this illustrative example, the second composite layer is associated with the first composite layer.

The process dissipates an electric charge on a surface of the structure (operation **1002**). The process also limits a flow of electric current in the second composite layer (operation **1004**), with the process terminating thereafter.

The flowcharts and block diagrams in the different depicted embodiments illustrate the architecture, functionality, and operation of some possible implementations of apparatuses and methods in different illustrative embodiments. In this regard, each block in the flowcharts or block diagrams may represent a module, segment, function, and/or a portion of an operation or step.

In some alternative implementations, the function or functions noted in the block may occur out of the order noted in the figures. For example, in some cases, two blocks shown in succession may be executed substantially concurrently, or the blocks may sometimes be executed in the reverse order, depending upon the functionality involved. Also, other blocks may be added in addition to the illustrated blocks in a flowchart or block diagram.

For example, operation **1002** and operation **1004** in **Figure 10** may be performed concurrently or in reverse order, depending on the particular implementation. Further, in some illustrative examples, operation **906** in **Figure 9** may not be performed to add coatings to the structures, depending on the particular implementation. In still yet other illustrative embodiments, additional layers may be included in addition to the composite layer forming the structure and the composite layer for the electric charge dissipation system.

Furthermore, in accordance with the various embodiments, an apparatus is disclosed including a first composite layer 318; and a second composite layer 320 associated with the first composite layer 318, wherein the first composite layer 318 and the second composite layer 320 form a structure 302, and wherein the second composite layer 320 has a conductivity configured to dissipate an electric charge 310 on a surface 312 of the structure 302 and limit a flow of an electrical current 311 in the second composite layer 320 in which the electrical current 311 is caused by an electromagnetic event 315.

In one variant wherein the second composite layer 320 is configured to reduce undesired electrical discharge 324 in an interior of the structure 302 and limit the flow of the electrical current 311 into the interior of the structure 302. In an alternative variant, wherein the second composite layer 320 is adjacent to an interior of the structure 302 and is configured to reduce a number of inconsistencies in the structure 302. In yet another alternative, wherein the structure 302 is a first structure and wherein the second composite layer 320 is configured to reduce galvanic corrosion that occurs when a second structure 338 is in contact with the structure 302.

In one alternative, the apparatus may further include a number of composite layers 502 located between the first composite layer 318 and the second composite layer 320. In another alternative, wherein the second composite layer 320 comprises fibers 412 and wherein the fibers (412) are comprised of a material selected from at least one of glass, carbon, ceramic, silica, organic materials, plastic, a polymer, nylon, and metal.

In one variant, wherein the second composite layer 320 includes a conductive material 422 selected from one of a metal, a metal alloy, nickel, carbon, a conductive polymer, titanium dioxide, and carbon black. In another variant, wherein the second composite layer 320 comprises fibers 412 and wherein the fibers 412 include at least one of a coating of a conductive material 422 and the conductive material 422 located in the fibers 412. In one variant, wherein the coating of the conductive material 422 includes at least one of a powder that adheres to the fibers 412 and a nano-powder that adheres to at least a portion of the fibers 412. In one example, wherein the second composite layer 320 includes fibers 412 that form a reinforcement and a resin 414 that forms a matrix 410 in the reinforcement 408. In yet another variant, wherein the resin 414 is configured to provide the conductivity 322 configured to dissipate the electric charge 310 on the surface of the structure 302 and limit the flow of the electrical current 311 in the second composite layer 320 on the surface 312 of the structure 302. In another example, the second composite layer 320 is a fiberglass layer. In another example, the structure 302 is a fuel tank 216. In yet another example, the second composite layer 320 includes a number of composite layers and has a resistivity from about 1x106 ohms-meters to about 1x1015 ohms-meters.

In yet another aspect, a composite fuel tank for an aircraft is disclosed including a wall 405 of the composite fuel tank 216 having a first composite layer 318; and a second composite layer 320 located on the first composite layer 318 in an interior of the composite fuel tank 216, wherein the first composite layer 318 and the second composite layer 320 form a structure 302, and wherein the second composite layer 320 is configured to dissipate an electric charge 310 on a surface 312 in the interior of the composite fuel tank and limit a flow of an electrical current 311 on the surface 312 in the interior of the composite fuel tank in which the electrical current 311 is caused by an electromagnetic event 315. In one variant, wherein the second composite layer 320 is configured to reduce undesired electrical discharge 324 in the interior of the composite fuel tank and limit the flow of the electrical current 311 in the interior 313 of the composite fuel tank. In another variant, wherein the structure 302 is a first structure and wherein the second composite layer 320 is configured to reduce galvanic corrosion that occurs when a second structure 338 is in contact with the composite fuel tank.

In yet another alternative, wherein the second composite layer 320 is comprised of fibers 412, wherein the fibers 412 are comprised of a material selected from at least one of glass, carbon, ceramic, silica, organic materials, plastic, a polymer, nylon, and metal. In still another variant, wherein the fibers 412 include at least one of a coating of a conductive material 422, the conductive material 422 located in the fibers 412, a coating of a powder of the conductive material 422 in which the powder adheres to the fibers, and a coating of a nano-powder that adheres to at least a portion of the fibers 412. In yet another alternative, wherein the fibers 412 are a reinforcement 408 for the first composite layer 318 and further including a resin 414 configured to provide a conductivity configured to dissipate the electric charge 310 on the surface of the structure 302 and limit the flow of the electrical current 311 on the surface 312 in the interior of the composite fuel tank.

In yet another aspect, a method is disclosed for operating a platform, the method includes operating the platform having a structure 302 comprising a first composite layer 318; and a second composite layer 320 associated with the first composite layer 318, wherein the second composite layer 320 has a conductivity 322 configured to dissipate an electric charge 310 on a surface of the structure 302 and limit a flow of an electrical current 311 in the second composite layer 320 in which the electrical current 311 is caused by an electromagnetic event 315. In one variant, wherein the conductivity of the second composite layer 320 is configured to reduce undesired electrical discharge 324 in an interior of the structure 302 and limit the flow of the electrical current 311 in the second composite layer 320.

Thus, the different illustrative embodiments provide a method and apparatus for managing electric charges. In one illustrative embodiment, an apparatus comprises a composite layer and a fabric layer. The composite layer is located on the fabric layer. The composite layer and the fabric layer form a structure. The fabric layer is configured to dissipate an electric charge on the surface of the structure and limit a flow of an electrical current in fabric in which the electrical current is caused by an electromagnetic event.

In addition, the fabric layer may be configured to reduce or prevent a flow of an electric charge, limit a flow of an electrical current in fabric, or a combination of the two that may occur in response to different events. Further, the fabric layer also may be configured to reduce galvanic corrosion that may occur from the structure contacting another structure.

In this manner, the different illustrative embodiments may provide dissipation of electric charges and limit a flow of an electrical current in a manner that may require less expense, less complexity, and less time to implement, as compared to currently available systems.

For example, by forming the electric charge dissipation system at the same time as the structure, additional operations to add the electric charge dissipation system may be avoided.

Further, with the use of one or more composite layers configured to dissipate an electric charge, the different illustrative embodiments may have a reduced weight and complexity, as compared to other types of electric charge dissipation systems. For example, the electric charge dissipation system in the different illustrative examples may be integrated as part of the structure itself. The addition of coatings, such as primers or other materials, to the surface of the structure may be avoided using the different illustrative embodiments.

A composite layer constructed in accordance with an illustrative embodiment may be used in the fuel tank. The composite layer has a conductivity that is high enough to dissipate an electric charge from a surface of the interior of the fuel tank, but the conductivity is low enough to limit the flow of an electric current to the surface of the interior of the fuel tank or elsewhere in the fuel tank. In the illustrative examples, the current may be caused by an electromagnetic event.

The description of the different illustrative embodiments has been presented for purposes of illustration and description and is not intended to be exhaustive or limited to the embodiments in the form disclosed. Many modifications and variations will be apparent to those of ordinary skill in the art. Further, different illustrative embodiments may provide different features as compared to other illustrative embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. An apparatus comprising:
a first composite layer (318);
a second composite layer (320) connected to the first composite layer (318), wherein the first composite layer (318) and the second composite layer (320) form a structure (302) comprising a fuel tank (216) in an aircraft (200) and wherein the second composite layer comprises a resin treated with a conductive material configured to dissipate an electric charge (310) on a surface (312) of the structure (302) and limit a flow of an electrical current (311) in the second composite layer (320) in which the electrical current (311) is caused by an electromagnetic event (315); and
a primer layer, located between the second composite layer and an interior of the structure, the primer layer configured to aid in dissipating the electric charge.

2. The apparatus of claim 1, wherein the second composite layer (320) is configured to reduce undesired electrical discharge (324) in an interior of the structure (302) and limit the flow of the electrical current (311) into the interior of the structure (302).

3. The apparatus of claim 1 or claim 2, wherein the structure (302) is a first structure and wherein at least one of: the primer layer, and a third composite layer, the second composite layer configured to reduce galvanic corrosion that occurs when a second structure (338) is in contact with the structure (302).

4. The apparatus of any of claims 1-3 further comprising:
a number of composite layers (502) located between the first composite layer (318) and the second composite layer (320).

5. The apparatus of any of claims 1-4, wherein the second composite layer (320) comprises fibers (412) and wherein the fibers (412) are comprised of a material selected from at least one of glass, carbon, ceramic, silica, organic materials, plastic, a polymer, nylon, and metal.

6. The apparatus of any of claims 1-5, wherein the second composite layer (320) includes a conductive material (422) selected from one of a metal, a metal alloy, nickel, carbon, a conductive polymer, titanium dioxide, and carbon black.

7. The apparatus of any of claims 1-6, wherein the second composite layer (320) comprises fibers (412) the fibers (412) configured to comprise at least one of: a second conductive material (422) and a coating comprising a third conductive material.

8. The apparatus of claim 7, wherein the coating of the conductive material (422) comprises at least one of a powder that adheres to the fibers (412) and a nano-powder that adheres to at least a portion of the fibers (412).

9. The apparatus of any of claims 1-8, wherein the second composite layer (320) comprises fibers (412) that form a reinforcement and the resin (414) that forms a matrix (410) in the reinforcement (408).

10. The apparatus of claim 9, wherein the resin (414) is configured to provide the conductivity (322) configured to dissipate the electric charge (310) on the surface of the structure (302) and limit the flow of the electrical current (311) in the second composite layer (320) on the surface (312) of the structure (302).

11. The apparatus of any of claims 1-10, wherein the structure (302) is a fuel tank (216).

12. The apparatus of any of claims 1-11, wherein the second composite layer (320) comprises a number of composite layers and has a resistivity from about 1x10⁶ ohms-meters to about 1x10¹⁵ ohms-meters.

13. A method for operating a platform, the method comprising:
operating the platform having a structure (302) comprising a first composite layer (318); and
a second composite layer (320) connected to the first composite layer (318), wherein the first composite layer (318) and the second composite layer (320) form a structure (302) comprising a fuel tank (216) in an aircraft (200) and wherein the second composite layer comprises a resin treated with a conductive material configured to dissipate an electric charge (310) on a surface (312) of the structure (302) and limit a flow of an electrical current (311) in the second composite layer (320) in which the electrical current (311) is caused by an electromagnetic event (315); and a primer layer, located between the second composite layer and an interior of the structure, the primer layer configured to aid in dissipating the electric charge.

## Patentansprüche

1. Vorrichtung, die aufweist:
eine erste Verbundschicht (318);
eine zweite Verbundschicht (320), die mit der ersten Verbundschicht (318) verbunden ist, wobei die erste Verbundschicht (318) und die zweite Verbundschicht (320) eine Struktur (302) bilden, die einen Treibstofftank (216) in einem Flugzeug (200) aufweist, und wobei die zweite Verbundschicht ein Harz aufweist, das mit einem leitenden Material behandelt ist, das dazu konfiguriert ist, eine elektrische Ladung (310) auf einer Oberfläche (312) der Struktur (302) zu dissipieren und einen Fluss eines elektrischen Stroms (311) in der zweiten Verbundschicht (320), in der der elektrische Strom (311) durch ein elektromagnetisches Ereignis (315) verursacht wird, zu begrenzen; und
eine Grundierungsschicht, die sich zwischen der zweiten Verbundschicht und einem Inneren der Struktur befindet, wobei die Grundierungsschicht dazu konfiguriert ist, beim Dissipieren der elektrischen Ladung zu unterstützen.

2. Vorrichtung nach Anspruch 1, wobei die zweite Verbundschicht (320) dazu konfiguriert ist, unerwünschtes elektrisches Entladen (324) in einem Inneren der Struktur (302) zu reduzieren und den Fluss des elektrischen Stroms (311) in das Innere der Struktur (302) zu begrenzen.

3. Vorrichtung nach Anspruch 1 oder Anspruch 2, wobei die Struktur (302) eine erste Struktur ist, und wobei wenigstens eines von: die Grundierungsschicht, und eine dritte Verbundschicht, die zweite Verbundschicht dazu konfiguriert ist, galvanische Korrosion zu begrenzen, die auftritt, wenn eine zweite Struktur (338) mit der Struktur (302) in Kontakt ist.

4. Vorrichtung nach einem der Ansprüche 1-3, die des Weiteren aufweist:
eine Anzahl von Verbundschichten (502), die sich zwischen der ersten Verbundschicht (318) und der zweiten Verbundschicht (320) befinden.

5. Vorrichtung nach einem der Ansprüche 1-4, wobei die zweite Verbundschicht (320) Fasern (412) aufweist, und wobei die Fasern (412) aus einem Material bestehen, das ausgewählt wird aus wenigstens einem von Glas, Carbon, Keramik, Silica, organischen Materialien, Kunststoff, einem Polymer, Nylon, und Metall.

6. Vorrichtung nach einem der Ansprüche 1-5, wobei die zweite Verbundschicht (320) ein leitendes Material (422) aufweist, das ausgewählt wird aus einem von einem Metall, einer Metalllegierung, Nickel, Carbon, einem leitenden Polymer, Titandioxid und Industrieruß.

7. Vorrichtung nach einem der Ansprüche 1-6, wobei die zweite Verbundschicht (320) Fasern (412) aufweist, wobei die Fasern (412) dazu konfiguriert sind, wenigstens eines aufzuweisen von: einem zweiten leitenden Material (422) und einer Beschichtung, die in drittes leitendes Material aufweist.

8. Vorrichtung nach Anspruch 7, wobei die Beschichtung des leitenden Materials (422) wenigstens eines aufweist von einem Pulver, das an den Fasern (412) anhaftet, und einem Nanopulver, das an wenigstens einem Abschnitt der Fasern (412) anhaftet.

9. Vorrichtung nach einem der Ansprüche 1-8, wobei die zweite Verbundschicht (320) Fasern (412) aufweist, die eine Verstärkung bilden, und das Harz (414), das eine Matrix (410) in der Verstärkung (408) bildet.

10. Vorrichtung nach Anspruch 9, wobei das Harz (414) dazu konfiguriert ist, die Leitfähigkeit (322) bereitzustellen, die dazu konfiguriert ist, die elektrische Ladung (310) auf der Oberfläche der Struktur (302) zu dissipieren und den Fluss des elektrischen Stroms (311) in der zweiten Verbundschicht (320) auf der Oberfläche (312) der Struktur (302) zu begrenzen.

11. Vorrichtung nach einem der Ansprüche 1-10, wobei die Struktur (302) ein Treibstofftank (216) ist.

12. Vorrichtung nach einem der Ansprüche 1-11, wobei die zweite Verbundschicht (320) eine Anzahl von Verbundschichten aufweist und eine Resistivität von ca. 1x10⁶ Ohmmeter bis ca. 1-10¹⁵ Ohmmeter hat.

13. Verfahren zum Betreiben einer Plattform, wobei das Verfahren aufweist:
Betreiben der Plattform, die eine Struktur (302) hat, welche ein erste Verbundschicht (318) aufweist; und
eine zweite Verbundschicht (320), die mit der ersten Verbundschicht (318) verbunden ist, wobei die erste Verbundschicht (318) und die zweite Verbundschicht (320) eine Struktur (302) bilden, die einen Treibstofftank (216) in einem Flugzeug (200) aufweist, und wobei die zweite Verbundschicht ein Harz aufweist, das mit einem leitenden Material behandelt ist, das dazu konfiguriert ist, eine elektrische Ladung (310) auf einer Oberfläche (312) der Struktur (302) zu dissipieren und einen Fluss eines elektrischen Stroms (311) in der zweiten Verbundschicht (320), in der der elektrische Strom (311) durch ein elektromagnetisches Ereignis (315) verursacht wird, zu begrenzen; und eine Grundierungsschicht, die sich zwischen der zweiten Verbundschicht und einem Inneren der Struktur befindet, wobei die Grundierungsschicht dazu konfiguriert ist, beim Dissipieren der elektrischen Ladung zu unterstützen.

## Revendications

1. Dispositif comprenant :
une première couche composite (318) ;
une deuxième couche composite (320) reliée à la première couche composite (318), dans lequel la première couche composite (318) et la deuxième couche composite (320) forment une structure (302) comprenant un réservoir à combustible (216) dans un aéronef (200) et dans lequel la deuxième couche composite comprend une résine traitée avec un matériau conducteur configuré pour dissiper une charge électrique (310) sur une surface (312) de la structure (302) et limiter un flux d'un courant électrique (311) dans la deuxième couche composite (320) dans laquelle le courant électrique (311) est provoqué par un événement électromagnétique (315) ; et
une couche primaire, située entre la deuxième couche composite et un intérieur de la structure, la couche primaire étant configurée pour aider à dissiper la charge électrique.

2. Dispositif selon la revendication 1, dans lequel la deuxième couche composite (320) est configurée pour réduire les décharges électriques non souhaitées (324) dans un intérieur de la structure (302) et limiter le flux du courant électrique (311) à l'intérieur de la structure (302).

3. Dispositif selon la revendication 1 ou la revendication 2, dans lequel la structure (302) est une première structure et dans lequel au moins une couche parmi : la couche primaire, et une troisième couche composite, la deuxième couche composite étant configurée pour réduire la corrosion galvanique qui se produit lorsqu'une seconde structure (338) est en contact avec la structure (302).

4. Dispositif selon une quelconque des revendications 1 à 3, comprenant en outre :
un nombre de couches composites (502) situées entre la première couche composite (318) et la deuxième couche composite (320).

5. Dispositif selon une quelconque des revendications 1 à 4, dans lequel la deuxième couche composite (320) comprend des fibres (412) et dans lequel les fibres (412) sont composées d'un matériau choisi à partir d'au moins un élément parmi le verre, le carbone, la céramique, la silice, des matériaux organiques, le plastique, le polymère, le nylon et le métal.

6. Dispositif selon une quelconque des revendications 1 à 5, dans lequel la deuxième couche composite (320) comporte un matériau conducteur (422) choisi à partir d'au moins un élément parmi un métal, un alliage métallique, le nickel, le carbone, un polymère conducteur, le dioxyde de titane et le noir de carbone.

7. Dispositif selon une quelconque des revendications 1 à 6, dans lequel la deuxième couche composite (320) comprend des fibres (412), les fibres étant configurées pour comprendre au moins un élément parmi : un deuxième matériau conducteur (422) et un revêtement comprenant un troisième matériau conducteur.

8. Dispositif selon la revendication 7, dans lequel le revêtement du matériau conducteur (422) comprend au moins un élément parmi une poudre qui adhère aux fibres (412) et une nanopoudre qui adhère à au moins une partie des fibres (412).

9. Dispositif selon une quelconque des revendications 1 à 8, dans lequel la deuxième couche composite (320) comprend des fibres (412) qui forment un renforcement et la résine (414) qui forme une matrice (410) dans le renforcement (408).

10. Dispositif selon la revendication 9, dans lequel la résine (414) est configurée pour fournir la conductivité (322) configurée pour dissiper la charge électrique (310) sur la surface de la structure (302) et limiter le flux du courant électrique (311) dans la deuxième couche composite (320) sur la surface (312) de la structure (302).

11. Dispositif selon une quelconque des revendications 1 à 10, dans lequel la structure (302) est un réservoir à combustible (216).

12. Dispositif selon une quelconque des revendications 1 à 11, dans lequel la deuxième couche composite (320) comprend un nombre de couches composites et présente une résistance d'environ 1x10⁶ ohmmètres à environ 1x10¹⁵ ohmmètres.

13. Procédé destiné au fonctionnement d'une plateforme, le procédé comprenant :
le fonctionnement de la plateforme présentant une structure (302) comprenant une première couche composite (318) ; et
une deuxième couche composite (320) reliée à la première couche composite (318), dans lequel la première couche composite (318) et la deuxième couche composite (320) forment une structure (302) comprenant un réservoir à combustible (216) dans un aéronef (200) et dans lequel la deuxième couche composite comprend une résine traitée avec un matériau conducteur configuré pour dissiper une charge électrique (310) sur une surface (312) de la structure (302) et limiter un flux d'un courant électrique (311) dans la deuxième couche composite (320) dans laquelle le courant électrique (311) est provoqué par un événement électromagnétique (315); et une couche primaire, située entre la deuxième couche composite et un intérieur de la structure, la couche primaire étant configurée pour aider à dissiper la charge électrique.
